# EUROPEAN PATENT APPLICATION

(11) **EP 3 771 369 A1**
(43) Date of publication of application: **03.02.2021**
(21) Application number: 19189174.6
(22) Date of filing: 30.07.2019
(51) Int. Cl.: A47J 31/44

(54) **COFFEE MACHINE DRIP TRAY**

(71) Applicant: BSH Hausgeräte GmbH, 81739 München (DE)
(72) Inventor: Schreiner, Thomas, 84431 Rattenkirchen (DE); Einsiedler, Thomas, 83278 Traunstein (DE); Henz, Manuel, 83410 Laufen (DE)

(57) **Abstract**

A drip tray for a coffee machine comprising a coffee grounds container consisting of a bottom wall and side walls, wherein a shelf for receiving coffee grounds, which is located substantially entirely within the coffee grounds container and which is height-adjustable is provided.

The present invention provides a drip tray with a coffee grounds container equipped with a movable shelf thanks to which the shape of the portions of the coffee grounds is retained so the cleaning of the coffee grounds container is much easier.

## Description

### Background of the invention

The present utility model relates to a coffee machine drip tray for a coffee machine comprising a removable coffee grounds container consisting of a bottom wall and side walls.

### State of the art

Coffee machines are well known in the state of the art and are present in the market in large number. Typically, coffee machines have a drip tray which is arranged removably under the beverage outlet and covered with a grid or the like. From time to time the drip tray has to be emptied manually or automatically.
Drip trays of the coffee machines are often equipped with different elements e.g. sensors, steam guiding elements, caps or the like to improve the processes.
The drip tray of the coffee machine typically have a coffee grounds container inside. The coffee grounds which left after the brewing process are collected in the coffee grounds container which is emptied when its full.

CN 1 079 551 393 A discloses a detection method for coffee grounds inside a coffee maker. Equipment comprises an infrared detection device, a coffee maker grounds containing box, a coffee maker control circuit, a prompter, coffee grounds and the coffee maker. According to the detection method for the coffee grounds inside the coffee maker, the height of the coffee grounds inside the coffee maker grounds containing box is monitored and fed back in real time in an infrared detection mode, the coffee grounds inside the coffee maker grounds containing box are effectively prevented from accumulating and overflowing from the coffee maker grounds containing box, full information of the coffee maker grounds containing box is fed back to a user by the prompter, normal use of the coffee maker is ensured, and the detection method has the advantages of simple structure, convenience in use, high sensitivity, rapid response, stable and reliable performance and the like.

CN 1 03 892 709 A discloses a coffee ground box detecting structure used for a coffee machine. The coffee ground box detecting structure comprises a coffee ground box, detecting devices for detecting the full ground state in the coffee ground box and a coffee machine control circuit, and the detection devices are arranged at an end opening of the coffee ground box and are electrically connected with the coffee machine control circuit. The detection devices are at least one set of light sensing elements. According to the technical scheme, the coffee ground box detecting structure has the advantages that the conditions in the coffee ground box are effectively fed back, and normal use of the coffee machine is guaranteed; meanwhile, the structure is simple, wide in use range and suitable for various coffee machines.

Presented solutions do not provide an easy, convenient method of emptying and cleaning of the coffee grounds container easier.

### The aim of the invention

It is the object of the present utility model to provide a further development with an advantage over the state of the art and provide a coffee machine drip tray with a coffee grounds container which simplifies emptying and cleaning the coffee grounds container and which ensures that the shape and the form of the coffee grounds do not change after reaching the coffee grounds container.

### Summary of the invention

The object is solved by a drip tray for a coffee machine comprising a removable coffee grounds container with a shelf for receiving coffee grounds, where the shelf is located substantially entirely within the coffee grounds container and which is height-adjustable. The height of the shelf is adjusted by a compression spring.

Typically the drip tray is a removable element of the coffee machine which collects liquids residues falling from the beverage outlet. The drip tray is placed inside the housing of the coffee machine. The drip tray has a removable coffee grounds container which is substantially rectangular and which is provided for collecting the coffee grounds which left after the brewing process.

The coffee grounds container is provided with a shelf which is placed substantially entirely within the coffee grounds container. The shelf is a substantially flat element which shape corresponds the shape of the coffee grounds container. The shelf is an element for receiving coffee grounds. The height of the shelf is adjustable what means that the position of the shelf can be different and depends on the load of the shelf. The height of the shelf is adjusted by a compression spring from the initial position in which the shelf is empty up to the lower position in which the shelf is loaded by the coffee grounds. Before the start of the brewing process the shelf is in its initial position. The shelf is in the initial position when the shelf is not loaded by the coffee grounds or other leftovers. In this position the shelf is aligned with the upper edge of the coffee grounds container. After the brewing process the coffee grounds fall down on the shelf in its initial position. The weight of the coffee grounds causes the compression of the spring and changing the position of the shelf. The more coffee grounds on the shelf, the height of the shelf is lower.
After the brewing process there are a coffee grounds which have to be removed. The coffee grounds are produced as small portions of fixed shape and concise structure what is desirable for the user. In such form the coffee grounds are easier to be removed from the coffee grounds container. When the coffee grounds portions fall down the coffee grounds container from the great height they disintegrate and coffee grounds particles stick to the coffee grounds container what causes that cleaning of the coffee grounds container is more difficult. Its highly desirable to provide the fixed shape and the form of the portions of the coffee grounds. For this reason the shelf inside the coffee grounds container is provided. The shelf is a simple, flat element which shape corresponds the shape of the coffee grounds container so the coffee grounds does not get under the shelf. The positive effect of the height adjustable shelf is that when the shelf is in the initial position so at its highest position the path of falling of the coffee grounds is relatively small and the portions of coffee grounds retain its shape. When the portions of the coffee grounds stay in their compressed form the cleaning of the coffee grounds container is easier as the coffee particles do not stick to the side walls of the coffee grounds container. In the preferred embodiment of the invention the one end of the compression spring is attached to the bottom wall of the coffee grounds container and the second end of the compression spring is attached to the shelf. The resistance force of the compression spring is chosen in such a way to could be changed by the very light weight portion of the coffee grounds.

Advantageously a gasket between the shelf and the side walls of the coffee grounds container is provided. The elastic gasket is provided on the perimeter of the shelf in order to prevent the coffee grounds particles from getting under the shelf. The gasket is made out of rubber, silicone or similar elastic material. The positive effect is that no coffee grounds get under the shelf what is not desirable from the customer perspective.

The present invention provides a drip tray with a coffee grounds container equipped with a movable shelf thanks to which the shape of the portions of the coffee grounds is retained so the cleaning of the coffee grounds container is much easier.

### Brief description of the figures

Further details of embodiments of the invention together with additional objects and corresponding advantages will be best understood form the following description of specific embodiments and in connection with the accompanying drawings.

In the drawing:
- Fig. 1: shows a drip tray of the coffee machine with a coffee grounds container in isometric view,
- Fig. 2: shows a cross-section of the coffee grounds container with the shelf in an initial position,
- Fig. 3: shows a cross-section of the coffee grounds container with the shelf in a loaded position.

### Detailed description of the invention

With reference to the attached drawing, the technical contents and detailed description of the present invention are describe thereinafter according to a preferable embodiment being not used to limit its executing scope. Any equivalent variation and modification made according to the appended claims is also covered by the claims claimed by the present invention.

In the following description of the preferred embodiments of the present invention, similar identical reference numbers designate identical or comparable components.

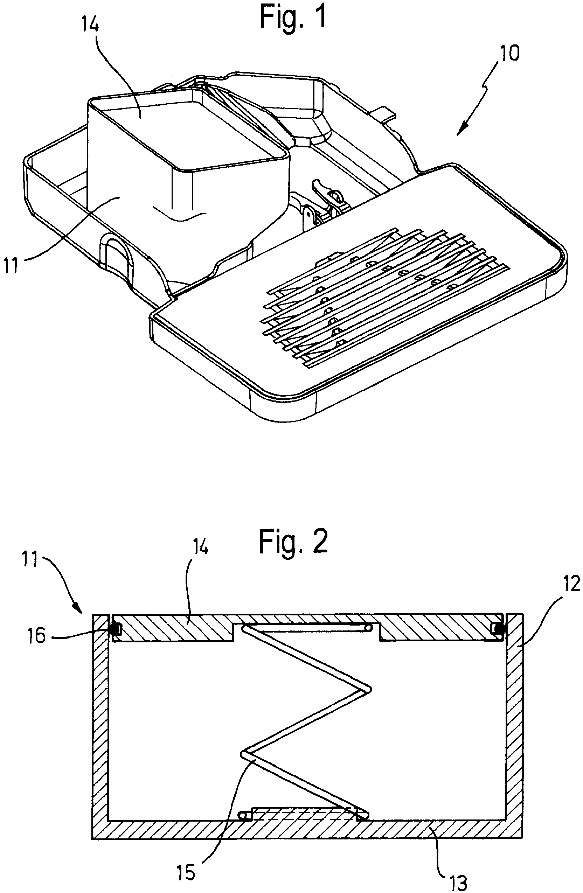

Fig. 1 shows a drip tray 10 of the coffee machine (not shown on the figure) which is arranged removably inside said coffee machine. The drip tray 10 is equipped with a removable coffee grounds container 11 which is inserted into the drip tray 10 freely.

Fig. 2 shows a cross-section of the coffee grounds container 11 with the shelf 14 in an initial position. The coffee grounds container 11 is a simple container with a rectangular shape with the side walls 12 and a bottom wall 13. The coffee grounds container 11 is provided for receiving the coffee grounds which remains after the brewing process. The coffee grounds container 11 is equipped with a shelf 14 for receiving coffee grounds. The shelf 14 is a flat, rectangular shaped element which is placed substantially entirely inside the coffee grounds container 11 and which is provided with a gasket 16 for sealing the space between the shelf 14 and the side walls 12 of the coffee grounds container 11. The shelf 14 is movable in vertical direction. Such move is possible thanks to the compression spring 15 which one end is attached to the bottom wall 13 of the coffee grounds container 11 and the second end is attached to the shelf 14. The initial position of the shelf 14 means that the shelf 14 is not loaded by any residuals and the shelf 14 is aligned with the upper edge of the coffee grounds container 11.

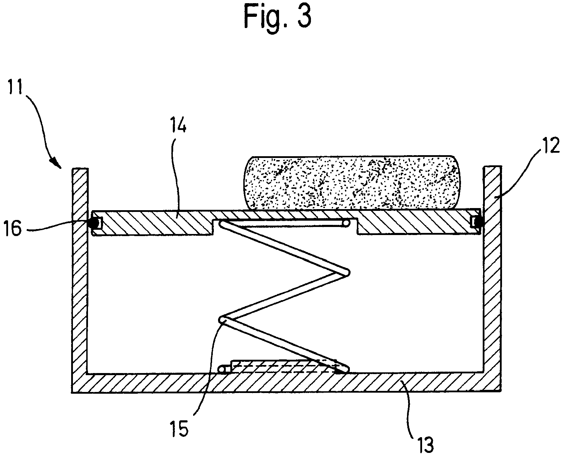

Fig. 3 shows a cross-section of the coffee grounds container 11 with the shelf 14 in a loaded position. The shelf 14 is in the loaded position when it is loaded by the portions of the coffee grounds and the compression spring 15 is compressed. The gasket 16 seals the area between the side walls 12 of the coffee grounds container 11 and the shelf 14 and prevents the coffee grounds particles against entering the area under the shelf 14.

The present invention provides a drip tray with a coffee grounds container equipped with a movable shelf thanks to which the shape of the portions of the coffee grounds is retained so the cleaning of the coffee grounds container is much easier.

### REFERENCE SIGNS

- 10: drip tray
- 11: coffee grounds container
- 12: side walls
- 13: bottom wall
- 14: shelf
- 15: compression spring
- 16: gasket

## Claims

1. A drip tray (10) for a coffee machine comprising a removable coffee grounds container (11) consisting of a bottom wall (13) and side walls (12), **characterized in that** a shelf (14) for receiving coffee grounds, which is located substantially entirely within the coffee grounds container (11) and which is height-adjustable is provided.

2. The drip tray (10) according to claim 1, **characterized in that** the height of the shelf (14) is adjusted by a compression spring (15).

3. The drip tray (10) according to any of the preceding claims, **characterized in that** the one end of the compression spring (15) is attached to the bottom wall (13) of the coffee grounds container (11) and the second end of the compression spring (15) is attached to the shelf (14).

4. The drip tray (10) according to any of the preceding claims, **characterized in that** a gasket (16) between the shelf (14) and the side walls (12) of the coffee grounds container (11) is provided.
